# EUROPEAN PATENT APPLICATION

(11) **EP 4 385 937 A1**
(43) Date of publication of application: **19.06.2024**
(21) Application number: 23215978.0
(22) Date of filing: 12.12.2023
(51) Int. Cl.: B66F 9/18, B65G 1/04

(54) **METHOD FOR OPTIMIZING THE STORAGE SPACE OF REELS IN AUTOMATED INDUSTRIAL AREAS**

(30) Priority: 12.12.2022 IT 202200025335
(71) Applicant: E80 Group S.p.A., 42030 Viano (Reggio Emilia) (IT)
(72) Inventor: CLEMENTINI, Gianluca, 42030 VIANO (REGGIO EMILIA) (IT)
(74) Representative: Feltrinelli, Secondo Andrea

(57) **Abstract**

A method for optimizing the storage space of reels, for example a first reel (B1) of paper to be placed and at least one second reel (B2) of paper already stored in an automated industrial area (A), by means of a vehicle automatic guided industrial machine or AGV (V), which is equipped with a gripper (3b1) for the reels, with sensors (4) for detecting the contact or abutment with the reels and being able to operate according to a normal operating mode or according to a special operating mode designed for detecting the contact or abutment of the first reel (B1) with the second reel (B2); the AGV (V) advances with the first reel (B1) in normal mode up to a certain distance (DB₂) from the second reel (B2), then, in special operating mode, the AGV (V) advances in the direction of the second reel (B2) by checking a contact or abutment of the first reel (B1) with the second reel (B2): in a positive case the advancement of the AGV (V) is blocked, in a negative case the AGV (V) continues to advance in the direction of the reel (B2) until the first reel (B1) comes into contact or abutment with the second reel (B2), finally the AGV (V) releases the first reel (B1) to the ground or onto the second reel (B2).

## Description

### TECHINCAL FIELD OF THE INVENTION

The present invention concerns a method for optimizing the storage space of reels, for example of paper, in automated industrial areas, in general by means of an automatic guided industrial vehicle or AGV (*Automatic Guided Vehicles*) or more particularly by means of a laser guided industrial vehicle or LGV (*Laser Guided Vehicles*), as well as an automatic guided industrial vehicle that implements this method.

### STATE OF THE PRIOR ART

Typically, in automated industrial areas that use automatically guided industrial vehicles for the storage or deposition of reels, the technical problem regarding the optimization of the storage space of these reels has been known for a long time.

With automatic guided industrial vehicles, it often happens that the reels are positioned or otherwise stored in such areas with a space of several centimeters from each other. As can be understood, the space existing between the stored reels, if repeated for example for several rows of reels, can translate into an enormous amount of wasted space which, instead, if better exploited, could have been used for the storage of a further number of reels or in any case for the storage of other objects.

Naturally, this can also significantly increase the general storage costs, since this wasted space could be used for other activities or in any case for the storage or deposition of a greater number of reels or other objects (think, for example, of the case where storage space is rented based on the size).

Furthermore, with reference to an industrial area for the storage of reels, in particular made of paper, a further technical problem arises concerning the safety of these reels and in general concerning the safety of the entire automated industrial area. In fact, in the event of an accidental fire of a reel, the space between the various stacks of reels would cause a chain reaction by which the fire would be progressively fed by all the other reels, thus causing enormous damage to the entire storage area.

On the contrary, if the stacks of reels were arranged in such a way that there is no space between one stack and the other, the combustion reaction would not have enough oxidizer, such as the oxygen present in the air, to propagate and therefore the fire would not be fueled by the other stacks of reels.

Document US2007269299A1 describes a method for placing a load on a transport, such as an enclosed truck trailer in a factory loading dock. This document uses a multi-fork AGV to bring the load, equipped with pallets with special pockets for the forks, closer to another load or to the back wall of the transport and, before touching it, places the load on the ground and then pushes it along the ground until the latter comes into contact with the other load or with that bottom wall. This operation is permitted only due to the fact that the transported products are supported by a pallet equipped with pockets for the AGV's forks, since if the latter were not there, the products would have to be pushed with the forks, compromising their integrity. Therefore, in this case the contact occurs between the respective pallets of the different loads and not between the products placed on top of the load, moreover, leaving space between the latter which, in the case of paper reels, does not allow the aforementioned technical problem to be resolved. This is also confirmed by the description of US2007269299A1 itself, where it is described in paragraph [0039] that the transport is loaded in such a way as to obtain a minimum amount of empty space between the loads.

It is therefore necessary to design and implement a method that allows the drawbacks of the prior art described above to be overcome.

### OBJECTS OF THE INVENTION

The technical purpose of the present invention is therefore to improve the state of the art regarding methods for optimizing the storage space of reels in automated industrial areas, in particular by means of automatically guided industrial vehicles.

To achieve this purpose, the present invention aims to provide a method for optimizing the storage space of reels in automated industrial areas.

A further object of the present invention is to provide a method for optimizing the storage space of reels in automated industrial areas which also allows such storage to be improved from a safety point of view.

In accordance with one aspect of the invention, a method according to claim 1 is provided.

In accordance with another aspect of the invention, an automatically guided vehicle according to claim 11 is provided.

The dependent claims refer to preferred and advantageous embodiments of the invention.

### BRIEF DESCRIPTION FO THE DRAWINGS

Other features and advantages of the invention will be more evident from the description of an embodiment of a method according to the present invention and from the description of an automatically guided industrial vehicle capable of implementing a method according to the present invention, illustrated by way of example in the attached drawings in which:

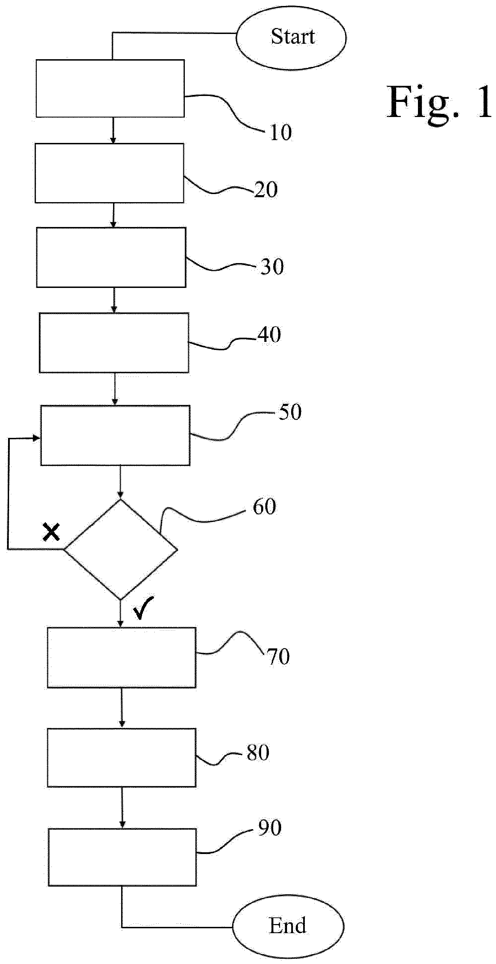

figure 1 shows a block diagram summarizing the main steps of the method according to the present invention;

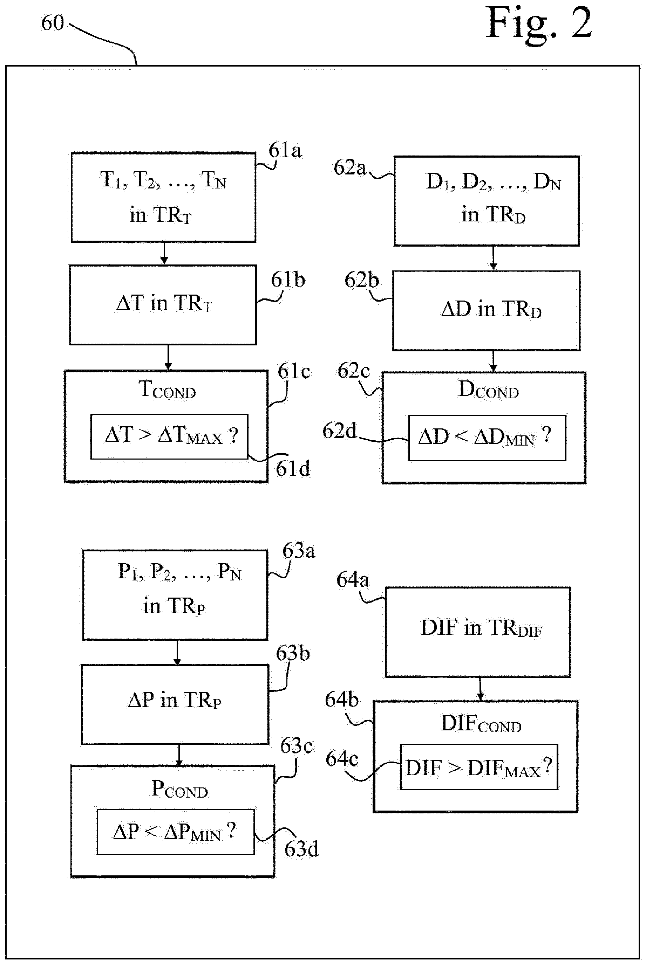

figure 2 shows a block diagram of a step of the method according to an embodiment of the present invention;

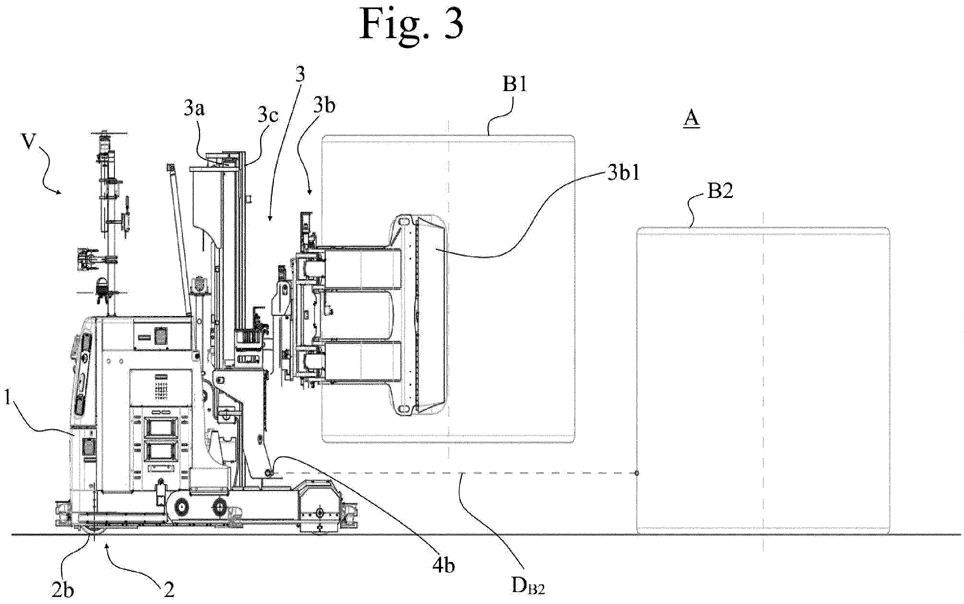

figure 3 shows an automatically guided industrial vehicle that is storing a reel using a method according to an embodiment of the present invention;

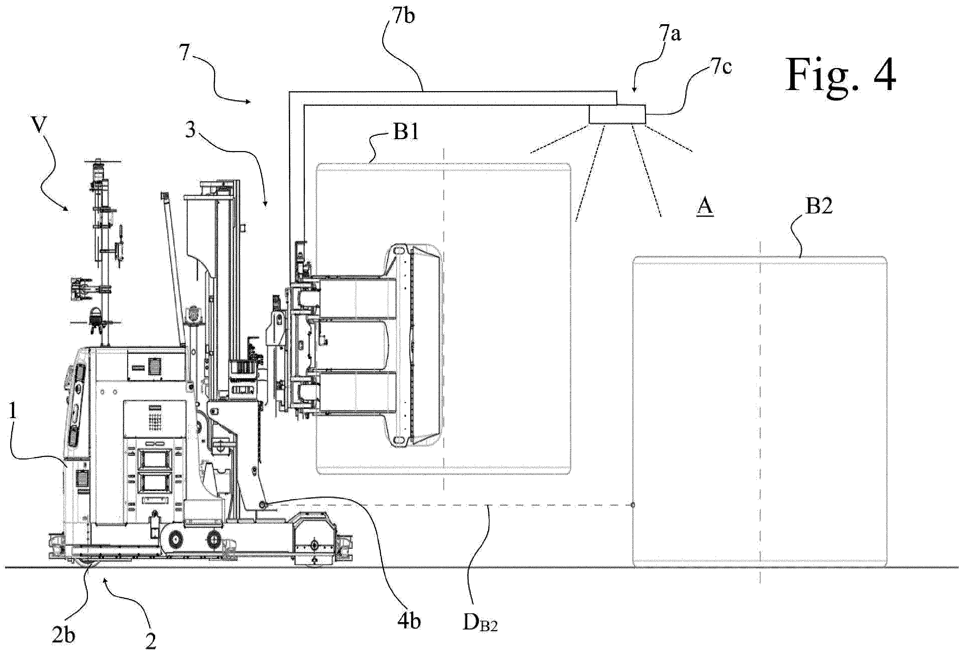

figure 4 shows another embodiment of an automatically guided industrial vehicle that is storing a reel using a method according to another embodiment of the present invention;

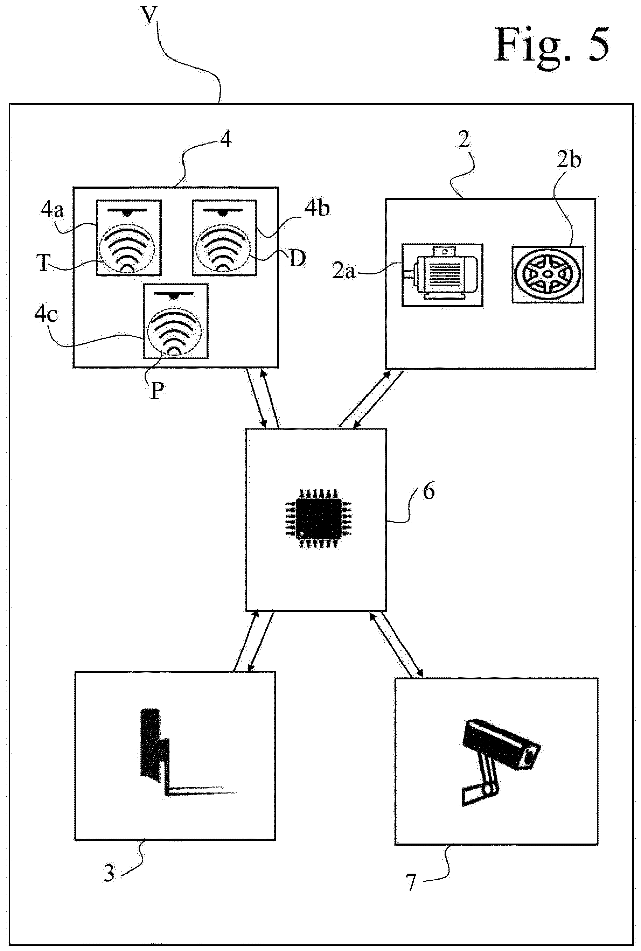

figure 5 shows a block diagram of the components of an embodiment of an automatic guided industrial vehicle for implementing a method according to an embodiment of the present invention.

### EMBODIMENTS OF THE INVENTION

Subject-matter of the present invention is a method for optimizing the storage space of reels, preferably made of paper, in automated industrial areas. The method according to the present invention will be described with reference to the storage of a first reel B1 in an automated industrial area "A" which includes at least a second reel B2 already positioned in a suitable storage area of the automated industrial area "A". The second reel B2 could have already been positioned in this area by means of an automatic guided industrial vehicle or AGV "V" or in any case by means of a suitable vehicle, such as for example a forklift or similar.

Naturally, the method according to the present invention is not limited in optimizing the storage space of only the first reel B1 but can be similarly repeated for all the reels that must be stored in the storage area, thus allowing the storage space of the entire area to be optimized.

In the present invention the method for optimizing the storage space is implemented by means of an automatic guided industrial vehicle or AGV "V" and more particularly by means of a laser guided industrial vehicle or LGV "V". Clearly, the automated industrial area "A" can include, based on its extension and based on the quantity of reels to be stored, several LGVs, each of which can perform the method according to the present invention.

Furthermore, in the present description the method that will be described can be used to store at least one reel B1 at a height level equal to that of at least a second reel B2, which will be called in the following "zero level", or even at higher height levels than that of at least one second reel B2, such as at a level double, triple, and so on in height than the height of reel B2, which will be called "level one," "level two," and so on.

It should be considered that the reels to be stored all have approximately the same diameter and the same width. The method according to the present invention however foresees the possibility that some reels have a slightly smaller or larger diameter, for example about 3 or 4 centimeters.

Furthermore, the AGV "V" knows, for example through an initialization procedure, the predefined measurements of the diameter and height of the reels. By way of non-limiting example, the reels can have a diameter between about 150 cm and about 300 cm and a height of about 260 cm.

In particular, the method for optimizing the storage space of at least a first reel B 1 in at least one automated industrial area "A", including at least a second reel B2, comprises, initially, the step of arranging 10, in the automated industrial area "A", at least one automatically guided industrial vehicle or AGV "V" which includes at least one frame 1 operatively connected to movement means 2 of the AGV "V", picking up and handling means 3 of the at least one first reel B1, detection means 4 of the contact or abutment of at least one first reel B1 with at least the second reel B2 and processing and control means 6 of the AGV "V" in electronic and/or electrical communication with the detection means 4.

For better reference, the frame 1 includes a rear area proximal to the picking up and handling means 3 of the at least one first reel B 1 and a front area distal from them or in any case distal from the rear area.

The AGV "V" can operate according to a normal operating mode or according to a special operating mode designed for detecting the contact or abutment of the first reel B1 with at least the second reel B2.

The terms "special operating mode" mean a mode in which the AGV "V", and more particularly the processing and control means 6, activate one or more controls (which will be described in detail below) for detecting the contact or abutment of the first reel B1 with at least the second reel B2. These controls are disabled during normal operating mode.

The terms "normal operating mode" mean, instead, a mode in which the AGV "V" is able to carry out all the usual movement operations of the same in the automated industrial area "A", such as for example the localization of the reel to be stored, its picking up, the localization of the storage area of the picked up reel, the movement of the AGV "V" to the storage area, etc.

As will be seen later, the special operating mode will be activated following the reaching of a certain distance DB₂ of the AGV "V" from the second reel B2, since it is necessary to guarantee that the AGV "V", during the movement steps in the operating environment, for example for picking up and handling the reels or even for any other tasks, does not detect contacts or does not find false positive, for example caused by possible external agents or by other AGVs that are moving in the automated industrial area "A ".

The method according to the present invention therefore involves the step of picking up 20, by means of the picking and handling means 3, the first reel B1. The first reel B1 may have been positioned inside the automated industrial area "A" in a temporary storage area, waiting for the AGV "V" to pick it up to store it in the dedicated storage area.

It should be noted that the first reel B1, during the handling and storage operations, is kept, by means of the picking up and handling means 3, raised and in an advanced position with respect to the frame 1 of the AGV "V" and therefore it is the first object that along the advancement direction of the AGV "V" can come into contact or can abut with the second reel B2.

Subsequently, the method involves the step of moving 30, by means of the movement means 2, the AGV "V" until the latter reaches a certain distance DB₂ from the second reel B2, for example a distance DB₂ equal to about 500 mm.

The method can also include the step of lowering or lifting, by means of the picking and handling means 3, the first reel B1 until the latter reaches a certain height with respect to the ground and/or with respect to the detection means 4, for example a height of about 500 mm with respect to the ground or a height of about 250 mm with respect to the distance sensor 4b, which will be better described later in the description, of the detection means 4. This step allows any contact or abutment of the first reel B1 with the second reel B2 occurs through a greater contact surface between the two, allowing a better distribution of the pressure exerted by the advancement of the AGV "V" and, consequently, easier contact or abutment detection.

In another version of the method according to the present invention, this step of lowering or lifting could also be foreseen immediately after the step of picking up 20.

Following the step of moving 30, by means of the movement means 2, the AGV "V" until the latter reaches a certain distance DB₂ from the second reel B2, the method according to the present invention preferably involves the step of reducing the speed with which the AGV "V" will subsequently be moved, for example up to a speed of about 100 mm/s. This step allows the subsequent movement of the AGV "V" to take place more slowly, so as to facilitate the detection of the contact or abutment between the first and second reels B1, B2.

Once the distance DB₂ has been reached, it is then possible to activate the one or more controls necessary to detect the contact or abutment of the first reel B 1 with the second reel B2.

In this regard, the method involves the step of activating 40, through the processing and control means 6, the special operating mode of the AGV "V". From this step onwards, it is therefore possible to detect any contact or abutment between the first reel B1 and the second reel B2.

The method therefore involves the step of moving 50, using the handling means 2, the AGV "V" in the direction of the second reel B2.

It should be noted that, in another version of the method according to the present invention, the step of activating 40 the special operating mode of the AGV "V" could be envisaged subsequent to the step of moving 50, by means of the movement means 2, the AGV "V" in the direction of the second reel B2, for example after the AGV "V" has traveled a certain portion of the distance DB₂. This certain portion can be, for example, equal to about 100 mm.

At this point, it is necessary to detect the contact or abutment of the first reel B1 with the second reel B2. In this regard, the method according to the present invention involves the step of verifying 60, by means of the processing and control means 6, whether the detection means 4 have detected a contact or abutment of the first reel B 1 with the second reel B2 and, if so, block 70 the handling means 2 while, if not, return to the step of moving 50, by means of the handling means 2, the AGV "V" in the direction of the second reel B2.

This step of verifying 60 can include the steps of measuring 61a, through at least one torque sensor 4a included in the detection means 4, a plurality of torque values T₁, T₂, ..., T_{N} of the movement means 2 in a given time interval TR_{T}, then calculate 61b the torque variation value ΔT in the given time interval TR_{T} and finally determine 61c whether said torque variation value ΔT satisfies a certain condition T_{COND}.

The condition T_{COND} can be related to a pre-set limit value, for example a torque variation limit value ΔT_{MAX}.

For this reason, the step of determining 61c preferably includes the step of comparing 61d the torque variation value ΔT with a respective pre-set torque variation limit value ΔT_{MAX}.

The number of the plurality of torque values T₁, T₂, ..., T_{N} measured in the given time interval TR_{T} will depend on the sampling time used by the torque sensor 4a to carry out the measurements.

The torque measurement T of the movement means 2 detected by the torque sensor 4a of the detection means 4 allows very important information to be given regarding the contact or abutment of the first reel B 1 with the second reel B2. In fact, in the event that the torque variation ΔT measured in the time interval TR_{T} exceeded the limit value ΔT_{MAX}, the condition T_{COND} would be satisfied and the step of verifying 60 would give a positive outcome, immediately blocking the movement of the AGV "V".

By way of non-limiting example, assume that the time interval TR_{T} is equal to 100 ms, that in this interval two torque values T₁, T₂ are detected in which Ti=70 Nm and T₂=110 Nm and that the value pre-set torque variation limit is ΔT_{MAX} in which ΔT_{MAX}=30 Nm. The torque variation ΔT in the time interval TR_{T} will be equal to T₂-T₁=40 Nm. This value would exceed the pre-set limit value ΔT_{MAX} and therefore the processing and control means 6 would detect the contact or abutment of the first reel B1 with the second reel B2.

Physically, exceeding the pre-set torque variation limit value ΔT_{MAX} indicates that the AGV is encountering an obstacle, presumably the second reel B2, which, due to its weight, causes an increase in the torque supplied to the movement means 2 in such a way as to allow, hypothetically, the advancement of the AGV "V".

The step of verifying 60, in addition or as an alternative to the aforementioned steps, can include the steps of measuring 62a, by means of a distance sensor 4b of the detection means 4, a plurality of distance values D₁, D₂, ..., D_{N} of the distance sensor 4b from the second reel B2 in a given time interval TR_{D}, calculate 62b the distance variation value ΔD in the given time interval TR_{D} and determine 62c if this distance variation value ΔD satisfies a certain condition D_{COND}. The condition D_{COND} can be related to a pre-set limit value, for example a distance variation limit value ΔD_{MIN}.

For this reason, the step of determining 62c preferably includes the step of comparing 62d the distance variation value ΔD with a respective pre-set distance variation limit value ΔD_{MIN}.

The number of the plurality of distance values D₁, D₂, ..., D_{N} measured in the given time interval TR_{D} will depend on the sampling time used by the distance sensor 4b to carry out the measurements.

The distance measurement D detected by the distance sensor 4b of the detection means 4 allows very important information to be given regarding the contact or abutment of the first reel B1 with the second reel B2. In fact, in the event that the distance variation ΔD measured in the time interval TR_{D} was lower than the limit value ΔD_{MIN}, the condition D_{COND} would be satisfied and the step of verifying 60 would give a positive outcome, immediately blocking the movement of the AGV "V".

By way of non-limiting example, assume that the time interval TR_{D} is equal to 150 ms, that in this interval two distance values D₁, D₂ are detected in which D₁=150 mm and D₂=145 mm and that the pre-set distance variation limit value is ΔD_{MIN} where ΔD_{MIN}=10 mm. The distance variation ΔD in the time interval TR_{D} will be equal to D₁-D₂=5 mm. This value would be lower than the pre-set limit value ΔD_{MIN} and therefore the processing and control means 6 would detect the contact or abutment of the first reel B1 with the second reel B2.

Physically, not exceeding the pre-set distance variation limit value ΔD_{MIN} indicates that the AGV is encountering an obstacle, i.e., the second reel B2, which, due to its weight, prevents the distance sensor 4b from approaching the second reel B2. For example, with a speed of the AGV "V" equal to about 100 mm/s, the distance sensor 4b would approach the second reel B2 by about 16.6 mm every 150 ms in normal conditions, i.e., without obstacles present along the advancement direction of the AGV "V". Therefore, a sharp decrease in the distance variation ΔD would mean that the AGV "V" has encountered an obstacle along this advancement direction, presumably the second reel B2.

It should be noted that this distance sensor 4b is preferably positioned at a rear-central area of the frame 1 of the AGV "V", at a certain distance from the ground, for example about 250 mm from the ground, so as to have a range of action that allows the correct detection of any obstacles present along the advancement direction of the AGV "V".

Furthermore, when the AGV "V" is carrying out the operation of positioning the first reel B 1 in the storage area, it will have the front area of frame 1 distal from the second reel B2 while the rear area of frame 1 will be proximal to the second reel B2. The picking up and handling means 3 of the first reel B 1 will be proximal to the second reel B2 and the AGV "V" will proceed in reverse.

The step of verifying 60, in addition or as an alternative to the aforementioned steps, can include the steps of measuring 63a, by means of a position sensor 4c of the detection means 4, a plurality of position values P₁, P₂, ..., P_{N} of the position sensor 4c in a given time interval TR_{P}, calculate 63b the position variation value ΔP in that given time interval TR_{P}, and determine 63c whether this position variation value ΔP satisfies a certain condition P_{COND}. The condition P_{COND} can be related to a pre-set limit value, for example a position variation limit value ΔP_{MIN}.

For this reason, the step of determining 63c preferably includes the step of comparing 63d the position variation value ΔP with a respective pre-set position variation limit value ΔP_{MIN}.

The number of the plurality of position values P₁, P₂, ..., P_{N} measured in the given time interval TR_{P} will depend on the sampling time used by the position sensor 4c to carry out the measurements.

Clearly, this sampling time is equal to or less than the given time interval TR_{P}.

The position measurement P of the AGV detected by the position sensor 4c of the detection means 4 allows very important information to be given regarding the contact or abutment of the first reel B1 with the second reel B2. In fact, in the event that the position variation ΔP measured in the time interval TR_{P} was lower than the limit value ΔP_{MIN}, the condition P_{COND} would be satisfied and the step of verifying 60 would give a positive outcome, immediately blocking the movement of the AGV" V".

By way of non-limiting example, assume that the time interval TR_{P} is equal to 150 ms, that in this interval two position values P₁, P₂ are detected in which Pi=550 mm and P₂=545 mm and that the pre-set position variation limit value is ΔP_{MIN} where ΔP_{MIN}=10 mm. The position variation ΔP in the time interval TR_{P} will be equal to P₁-P₂=5 mm. This value would be lower than the pre-set limit value ΔP_{MIN} and therefore the processing and control means 6 would detect the contact or abutment of the first reel B1 with the second reel B2.

Physically, not exceeding the pre-set position variation limit value ΔP_{MIN} indicates that the AGV is encountering an obstacle, i.e., the second reel B2, which, due to its weight, prevents the position sensor 4c, and therefore the AGV "V", from approaching towards the second reel B2. For example, with a speed of the AGV "V" equal to about 100 mm/s, the position sensor 4c would approach the second reel B2 by about 16.6 mm every 150 ms in normal conditions, i.e., without obstacles present along the advancement direction of the AGV "V". Therefore, a sharp decrease in the position variation ΔP would mean that the AGV "V" has encountered an obstacle along this advancement direction, presumably the second reel B2.

It should be noted that the position sensor 4c can be, for example, the navigation laser scanner that the AGV "V" uses to move, and therefore the reference system that this sensor 4c uses to detect the position of the AGV " V" is different from the reference system which instead uses the distance sensor 4b to detect the distance between the second reel B2 and the same sensor 4b since, as can be understood, these sensors are mounted on the AGV "V" in different positions.

Basically, this verification of the position variation ΔP of the AGV "V" can constitute an additional check to the verification of the distance variation ΔD.

The step of verifying 60, in addition to the aforementioned steps relating to the calculation of the distance variation value ΔD and the position variation value ΔP, can include a further check which can be activated by carrying out the steps of calculating 64a the difference DIF between the distance variation value ΔD of the distance sensor 4b from the second reel B2 in a given time interval TR_{DIF} and the position variation value ΔP of the position sensor 4c in the given time interval TR_{DIF}, and determine 64b if the difference value DIF satisfies a certain condition DIF_{COND}.

The condition DIF_{COND} can be related to a pre-set limit value, for example a difference limit value DIF_{MAX}.

For this reason, the step of determining 64b preferably includes the step of comparing 64c the difference value DIF with a respective predetermined difference limit value DIF_{MAX}.

The difference measurement DIF between the distance variation ΔD detected by the distance sensor 4b and the position variation ΔP detected by the position sensor 4c allows to give very important information regarding the contact or abutment of the first reel B1 with the second reel B2. In fact, in the event that the difference value DIF measured in the time interval TR_{DIF} was higher than the limit value DIF_{MAX}, the condition D_{COND} would be satisfied and the step of verifying 60 would give a positive outcome, immediately blocking the movement of the AGV "V".

By way of non-limiting example, assume that the time interval TR_{DIF} is equal to 100 ms, that in this interval two distance values D₁, D₂ are detected in which D₁=150 mm and D₂=149 mm and two values of position P₁, P₂ in which Pi=550 mm and P₂=528 mm and that the pre-set difference limit value is DIF_{MAX} in which DIF_{MAX}=20 mm. The difference value DIF will be equal to |ΔD-ΔP|=21 mm. This value would exceed the pre-set limit value DIF_{MAX} and therefore the processing and control means 6 would detect the contact or abutment of the first reel B 1 with the second reel B2.

Physically, exceeding the pre-set difference limit value DIF_{MAX} indicates that the AGV "V" is encountering an obstacle, however, for example in the case in which the second reel B2 was particularly light, its weight would not be able to increase the torque variation value ΔT beyond the pre-set torque variation limit value ΔT_{MAX} and consequently the advance of the AGV "V" would continue. Therefore, the position sensor 4c would still detect a position variation value ΔP higher than the pre-set position variation limit value ΔP_{MIN} but, at the same time, the distance sensor 4b would not detect any distance variation between the AGV "V" and the second reel B2 since the contact or abutment of the first reel B1 with the second reel B2 has already occurred and therefore this distance does not increase or decrease.

This check therefore constitutes an additional control to the check of distance variation ΔD for detecting the contact or abutment of the first reel B1 with the second reel B2. As can be understood, in normal conditions, i.e., when the at least one second reel B2 is a reel made, for example, of rigid paper and therefore has a considerable weight, the difference value DIF will remain approximately equal to zero since the distance sensor 4b and position sensor 4c, both mounted on the AGV "V", will move with the same speed.

At this point, the AGV "V" or more particularly the processing and control means 6, have detected the contact or abutment of the first reel with the second reel B2, or in any case with another reel in the case of storage at a level above zero. The method therefore involves the step of moving 80, by means of the picking up and handling means 3, the first reel B1 in the direction of the ground until the first reel B1 comes into contact or abuts with the second reel B2 or with the ground.

Finally, the method involves the step of releasing 90, by means of the picking up and handling means 3, the first reel B 1. At this point, the first reel B 1 is positioned in the dedicated storage area.

In the event that the first reel B1 and/or the second reel B2 are reels made of soft paper, the method according to the present invention can include, before the step of moving 50, by means of the movement means 2, the AGV "V " in the direction of the second reel B2, a first step of rotating the picking up and handling means 3 by a first specific angle, for example equal to about -10°, and before the step of moving 80, by means of the picking up and handling means 3, the first reel B1 in the direction of the ground until the first reel B 1 comes into contact or abuts with the second reel B2 or with the ground, a second step of rotation, in the opposite direction to the first step of rotation, by a second specific angle, for example equal to about 7°, the picking up and handling means 3. As is known, soft paper reels are more delicate than rigid paper ones and, therefore, are more subject to possible breakages or damage during storage. The two rotation steps described above allow the pressure between the two reels B1, B2 to be decreased since during the contact step there is less contact surface between them. This allows the integrity of the two reels to be preserved.

In another version of the method according to the present invention, the step of arranging 10 can include the arranging of the AGV "V" also equipped with acquisition means 7 in electronic and/or electrical communication with the processing and control means 6. In this case, the step of verifying 60 also includes the step of acquiring, by means of the acquisition means 7 of the AGV "V", the diameter variation value of said first reel B1 caused by the crushing of the gripping force of the picking up and handling means 3. This diameter variation value can be communicated to the processing and control means 6 to adjust the storage or positioning of the first reel B1.

In another embodiment of the method according to the present invention, the acquisition means 7 could also detect the distance value between the first reel B 1 and the second reel B2, and then communicate it to the processing and control means 6.

In this case, the step of verifying 60 could include, in addition or as an alternative to the step of acquiring, also the step of detecting, by means of the acquisition means 7 of the AGV "V", the distance between the first reel B1 and the second reel B2. This would, in fact, constitute an additional control for detecting the contact or abutment of the first reel B 1 with the second reel B2.

It should be noted that, in case of storage or positioning of the first reel B1 at a level higher than the zero level, and therefore with a reel of a given level ideally placed in a way corresponding to the respective reel of the lower level, the diameter variation could cause small positioning differences which, however, considering very long rows of reels, could propagate from reel to reel causing increasingly higher positioning differences. The diameter variation information therefore makes it possible to mitigate this possible problem.

As regards the sensitivity of the detection of the contact or abutment of the first reel B 1 with the second reel B2, it depends on the time intervals TR_{T}, TR_{D}, TR_{P}, TR_{DIF} used to calculate respectively the variations in torque ΔT, distance ΔD, position ΔP and difference of variation between distance and position DIF: by using shorter time intervals it is possible to increase the sensitivity of the detection of contact or abutment of the first reel B 1 with the second reel B2 however at the same time the overall robustness of the method is decreased with respect to any errors or disturbances caused by external agents. For the correct setting of the time intervals TR_{T}, TR_{D}, TR_{P}, TR_{DIF} it is therefore necessary to find the right compromise between sensitivity and robustness.

Subject-matter of the present invention is also an automatic guided industrial vehicle or AGV "V" capable of implementing the method described above.

The AGV "V" is therefore designed for the storage of at least a first reel B 1 in at least one automated industrial area "A" including at least a second reel B2. The AGV "V" includes at least a frame 1 operatively connected to the movement means 2 of the AGV "V", picking up and handling means 3 of the at least one first reel B 1, detecting means 4 of the contact or abutment of the at least one first reel B1 with at least the second reel B2 and processing and control means 6 of the AGV "V" in electronic and/or electrical communication with the detection means 4.

These detection means 4 are designed to measure a plurality of values T₁, T₂, ..., T_{N}, D₁, D₂, ..., D_{N}, P₁, P₂, ..., P_{N} of at least one parameter T, D, P in at least a given time interval TR_{T}, TR_{D}, TR_{P}, TR_{DIF} and to communicate said plurality of values T₁, T₂, ..., T_{N}, D₁, D₂, ..., D_{N}, P₁, P₂, ..., P_{N} to the processing and control means 6 so that the processing means and control 6 can verify the contact or abutment of the first reel B1 with the second reel B2 by calculating at least one variation value of the at least one parameter ΔT, ΔD, ΔP in at least a given time interval TR_{T}, TR_{D}, TR_{P} and/or the difference DIF between two respective variation values ΔD, ΔP of the two parameters D, P of the at least one parameter T, D, P in a given time interval TR_{DIF} to determine whether the at least one variation value ΔT, ΔD, ΔP and/or the difference DIF satisfies at least one certain condition T_{COND}, D_{COND}, P_{COND}, DIF_{COND}.

Such at least one certain condition T_{COND}, D_{COND}, P_{COND}, DIF_{COND} is, preferably, related to a pre-set torque variation limit value ΔT_{MAX} and/or to a pre-set distance variation limit value ΔD_{MIN} and/or to a pre-set position variation limit value ΔP_{MIN} and/or to a pre-set difference limit value DIF_{MAX}.

So far as the detection means 4 are concerned, they preferably include at least one torque sensor 4a designed to measure the torque value T of the movement means 2 and/or at least one distance sensor 4b, for example a photoelectric sensor, designed to measure the distance value D between the distance sensor 4b and at least the second reel B2 and/or at least one position sensor 4c of the AGV "V", for example a navigation laser scanner, designed to measure the distance value P between at least one first and at least one second position of the position sensor 4c or, more generally, of the AGV "V" in the time interval TR_{P}.

In this regard, the at least one parameter T, D, P preferably includes the torque measurement T of the movement means 2 and/or the distance measurement D of the distance sensor 4b from the second reel B2 and/or the position measurement P of the position sensor 4c or, more generally, of the AGV "V". The photoelectric sensor 4b can use a laser-type light source to detect the distance between itself and any obstacles present in the automated industrial area "A", for example the second reel B2. The navigation laser scanner 4c, instead, can be fixed and/or mounted on the AGV "V", at a precise height above the ground, to carry out scans in very short times, for example a scan every about 14 ms in order to obtain a map of points for the creation of a three-dimensional reproduction of the scene in order to allow spatial positioning of the AGV "V" within the operating environment and allow the latter to move safely in this environment.

As regards the movement means 2, they can include at least one motor 2a and a plurality of wheels or tracks 2b operatively associated with the at least one motor 2a. The activation of the motor 2a, for example by controlling the processing and control means 6, allows the movement of the AGV "V" by means of the plurality of wheels or tracks 2b.

With reference to the picking up and handling means 3 of the at least one first reel B1, they can include at least one support upright 3a associable with the frame 1, and at least one manipulation head 3b for at least the first reel B1 connected to the support upright 3a. The manipulation head 3b can include at least gripping means 3b1, for example two opposing grippers, configured to grip at least the first reel B1 while the support upright 3a can include at least vertical translation means 3c, for example a sliding guide, configured to translate the manipulation head 3b along a direction perpendicular to the ground. The gripping means 3b1 can be operated, for example, by means of a hydraulic system, so as to tighten the reel at its lateral surface, exerting a pressure such as to generate sufficient friction to guarantee a stable grip thereof.

Regarding the processing and control means 6, they can include at least one central processing unit capable of managing all the functions of the AGV "V" by means of suitable processing sub-units or in any case through suitable computer programs or software stored in at least one memory of that central processing unit. For example, the at least one central processing unit could comprise at least one arithmetic-logic unit or ALU for performing arithmetic operations, for example, for calculating the torque ΔT and/or distance ΔD and/or position ΔP variation values and related storage means for at least these values.

In another version of the vehicle according to the present invention, the AGV "V" can include acquisition means 7 configured to acquire the variation value of the diameter of the first reel B 1 caused by the crushing of the gripping force of the picking up and handling means 3 and/or to detect the distance value between the first reel B1 and the second reel B2. In particular, the acquisition means 7 can include second detection means 7a and mobile support means 7b for said second detection means 7a, such as, for example, a movement arm. The mobile support means 7b can be, in addition to being integrally connected to the picking up and handling means 3, also displaceable, for example, along a direction parallel to the ground, so as to allow the second detection means 7a to obtaining scene detection as precise as possible.

For this purpose, the mobile support means 7b or, more particularly, the movement arm, can advantageously be operated in a translational or rotational manner according to one or more degrees of freedom in order to allow precise detection of the scene to be obtained in any operational situation.

More in detail, the second detection means 7a can comprise at least a second distance sensor 7c, for example a second photoelectric sensor or a Time-Of-Flight or TOF-camera. The second detection means 7a, and in particular the at least one second distance sensor 7c, are capable of recreating an artificial reproduction of the scene under their range of action and, therefore, allow to obtain the diameter variation value of the first reel B 1 caused by the crushing of the gripping force of the gripping means 3b1 by detecting, for example, the difference between the predefined diameter value of the first reel B1 and the real one after the picking up.

The acquisition means 7 of the AGV "V" could also detect the distance value between the first reel B 1 and the second reel B2 and then communicate it to the processing and control means 6. This constitutes an additional control for the detection of the contact or abutment of the first reel B 1 with the second reel B2.

In the following, it is described a brief non-limiting example of application of the method according to a preferred embodiment of the present invention using an AGV capable of or configured to implement this method.

Assume that the AGV "V" must store or in any case position the reel B1 at the zero level. The AGV "V", which can be moved by means of the movement means 2, and in particular by means of the motor 2a which provides the energy necessary to move the plurality of wheels or tracks 2b, moves towards the temporary storage area of the reels and picks up, by means of the picking up and handling means 3, and in particular by means of the gripping means 3b1, the first reel B1. Subsequently, the AGV "V" moves until it reaches the distance DB₂ of about 500 mm from the second reel B2.

The AGV "V" during these steps operates in normal operating mode, therefore the controls for detecting the contact or abutment of the first reel B1 with the second reel B2 are disabled. Subsequently, the first reel B1 is moved by means of the picking up and handling means 3 until it is brought to a height equal to about 250 mm above the distance sensor 4b. It is therefore possible to activate the special operating mode and, consequently, all the controls for detecting the contact or abutment of the first reel B1 with the second reel B2. This operation of activating the special operating mode could also be performed after resuming movement of the AGV in the direction of the second reel B2, for example after a further 100 mm of distance travelled.

Then, the method proceeds by moving the AGV "V" in the direction of the second reel, until the processing and control means 6 detect a contact or abutment by means of at least one of the controls described above, i.e., a torque variation ΔT above the respective pre-set limit value and/or a distance ΔD and/or a position ΔP variation value below the respective pre-set limit value or a difference DIF between the distance variation value ΔD and the position variation value ΔP above the respective pre-set limit value.

If at least one of these conditions occurs, the movement of the AGV is interrupted. In particular, in the example described above, the contact or abutment between the first reel B1 and the second reel B2 will be detected by means of a torque variation value ΔT higher than the pre-established limit, by means of a distance variation value ΔD lower than pre-established limit value and also by means of a position variation value ΔP lower than the pre-established limit value, since the weight of the second reel B2 greatly increases the torque of the AGV and also blocks its advancement, causing a sharp decrease in distance variation ΔD between the distance sensor 4b and the second reel B2 and also a sharp decrease in the position variation ΔP between at least one first and at least one second position of the position sensor 4c or, more generally, of the AGV "V" in the given time interval TR_{P}.

The AGV "V" can then proceed by moving the first reel B2 in the direction of the ground by means of the picking up and handling means 3 or more particularly by means of the vertical translation means 3c until the next contact or abutment of the first reel B1 with the ground. Finally, the gripping means 3b1 can release the first reel B1.

Now assume that the AGV must store or in any case position reel B1 at level one. In the event that there is another reel at level one, the method is substantially similar to the method used for positioning or storing a reel at level zero while if there is no reel present at level one, and therefore the reel to be positioned is the first of the level, the AGV "V" proceeds with the positioning of the reel B1 using as a reference the distance previously detected for the positioning of the reel at level zero. It should be remembered that the AGV "V" or more particularly the processing and control means 6 know the predefined height and diameter measurements of the reels and, therefore, are able to calculate what is the correct theoretical positioning of the reel at level one, by performing a simple difference between distances.

It should be noted that, in any case, the method for positioning or storing a reel at a level above zero may undergo variations inherent to at least one pre-established limit value ΔT_{MAX}, ΔD_{MIN}, ΔP_{MIN}, DIF_{MAX}, for example based on the intrinsic instability of the level considered, which will grow as the levels increase.

Subject-matter of the present invention is also a plant comprising an automated industrial area A, at least a first reel B1, at least a second reel B2 positioned in the automated industrial area A and at least one automatically guided industrial vehicle V configured to perform a method according to the present invention or according to non-limiting embodiments of the present invention.

Preferably, the at least one automatic guided industrial vehicle V of the plant is an automatically guided industrial vehicle according to the present invention or according to non-limiting embodiments of the present invention.

Always preferably, the first reel B1 and the second reel B2 are paper reels, for example soft paper reels but, if desired, also rigid paper reels.

The method according to the present invention as well as the automatic guided industrial vehicle that implements this method and the respective plant, allow the optimization of the storage space of reels in automated industrial areas since there is no unused residue space between a reel and the previous and subsequent one.

The method according to the present invention therefore allows a notable reduction in wasted space, which translates into an increase in the storage space available for the possible storage of other goods or in any case other reels.

Furthermore, this method also allows to increase the safety of the storage of these reels, since, as there is no space between them, the possibility of fire, or in any case of its spread, decreases considerably since there is not enough oxygen present to fuel such a fire.

It has thus been seen how the invention fully achieves the proposed objects.

Modifications and variations of the invention are possible within the scope of protection defined by the following claims.

## Claims

1. Method for optimizing the storage space of at least a first reel (B 1) in at least one automated industrial area (A) including at least a second reel (B2), comprising the steps of:
arranging (10), in said at least one automated industrial area (A), at least one automatically guided industrial vehicle or AGV (V) comprising at least one frame (1) operatively connected to movement means (2) of said AGV (V), picking up and handling means (3) of at least said first reel (B 1), detection means (4) of the contact or abutment of said first reel (B1) with at least said second reel (B2) and processing and control means (6) of said AGV (V) in electronic and/or electrical communication with said detection means (4), said at least one AGV (V) being able to operate according to a normal operating mode or according to a special operating mode designed for detecting the contact or abutment of said first reel (B1) with at least said second reel (B2);
picking up (20), by means of said picking up and handling means (3), said first reel (B1);
moving (30), by means of said movement means (2), said AGV (V) until the latter reaches a certain distance (D_{B2}) from said second reel (B2);
activating (40), by means of said processing and control means (6), said special operating mode;
moving (50), by means of said movement means (2), said AGV (V) in the direction of said second reel (B2);
checking (60), by means of said processing and control means (6), if said detection means (4) have detected a contact or abutment of said first reel (B1) with said second reel (B2) and, if so, blocking (70) said movement means (2) while, if not, returning to the step of moving (50), by means of said handling means (2), said AGV (V) in the direction of said second reel (B2);
handling (80), by means of said pick-up and handling means (3), said first reel (B 1) in the direction of the ground until said first reel (B 1) comes into contact or abuts with said second reel (B2) or with the ground; and
releasing (90), by means of said picking up and handling means (3), said first reel (B1).

2. Method according to any one of the preceding claims, wherein said step of checking (60) comprises the steps of:
measuring (61a), through at least one torque sensor (4a) of said detection means (4), a plurality of torque values (T₁, T₂, ..., T_{N}) of said movement means (2) in a given time interval (TR_{T});
calculating (61b) the torque variation value (ΔT) in said given time interval (TR_{T}); and
determining (61c) whether said torque variation value (ΔT) satisfies a certain condition (T_{COND}).

3. Method according to any one of the preceding claims, wherein said step of checking (60) comprises the steps of:
measuring (62a), through a distance sensor (4b) of said detection means (4), a plurality of distance values (D₁, D₂, ..., D_{N}) of said distance sensor (4b) from said second reel (B2) in a given time interval (TR_{D});
calculating (62b) the distance variation value (ΔD) in said given time interval (TR_{D}); And
determining (62c) whether said distance variation value (ΔD) satisfies a certain condition (D_{COND}).

4. Method according to any one of the preceding claims, wherein said step of checking (60) comprises the steps of:
measuring (63a), by means of a position sensor (4c) of said detection means (4), a plurality of position values (P₁, P₂, ..., P_{N}) of said position sensor (4c) in a given time interval (TR_{P});
calculating (63b) the position variation value (ΔP) in said given time interval (TR_{P}); and
determining (63c) whether said position variation value (ΔP) satisfies a certain condition (P_{COND}).

5. Method according to claim 3 or 4, wherein said step of checking (60) comprises the steps of:
calculating (64a) the difference value (DIF) between said distance variation value (ΔD) of said distance sensor (4b) from said second reel (B2) in a given time interval (TR_{DIF}) and said position variation value (ΔP) of said position sensor (4c) in said given time interval (TR_{DIF}); And
determining (64b) whether said difference value (DIF) satisfies a certain condition (DIF_{COND}).

6. Method according to any one of claims 2 to 5, wherein said step of determining comprises the step of:
comparing (61d, 62d, 63d, 64c) said torque variation value (ΔT) and/or said distance variation value (ΔD) and/or said position variation value (ΔP) and/or said difference value (DIF) with a respective predefined limit value (ΔT_{MAX}, ΔD_{MIN}, ΔP_{MIN}, DIF_{MAX}).

7. Method according to any one of the preceding claims, comprising, following the step of picking up (20), the step of lowering or raising, by means of said picking up and handling means (3), said first reel (B1) until said first reel (B 1) reaches a certain height with respect to the ground and/or with respect to said detection means (4).

8. Method according to any one of the preceding claims, wherein said step of arranging (10) comprises the arranging of said AGV (V) further comprising acquisition means (7) in electronic and/or electrical communication with said processing and control means (6), said step of checking also including the steps of:
acquiring, by means of said acquisition means (7) of said AGV (V), the diameter variation value of said first reel (B 1) caused by the crushing of the gripping force of said picking up and handling means (3), and/or
detecting by means of said acquisition means (7) of said AGV (V), the distance between said first reel (B 1) and said second reel (B2).

9. Method according to any one of the preceding claims, wherein said first reel (B1) and/or said second reel (B2) are reels made of soft paper, and wherein said method comprises, before the step of moving (50), by means of said movement means (2), said AGV (V) in the direction of said second reel (B2), a first step of rotating by a first determined angle said picking up and handling means (3), and before the step of handling (80), by means of said picking up and handling means (3), said first reel (B1) in the direction of the ground until said first reel (B1) comes into contact or abuts with said second reel (B2) or with said ground, a second step of rotating, in the opposite direction to the first step of rotating, by a second determined angle said picking up and handling means (3).

10. Method according to any one of the preceding claims, comprising subsequently to the step of moving (30), by means of said movement means (2), said AGV (V) until the latter reaches a certain distance (D_{B2}) from said second reel (B2), the step of reducing, by means of said processing and control means (6), the speed with which said AGV (V) will subsequently be moved in the step of moving (50), by means of said movement means (2), said AGV (V) in the direction of said second reel (B2).

11. Automatically guided industrial vehicle or AGV (V) designed to store at least a first reel (B1) in at least one automated industrial area (A) including at least a second reel (B2), said AGV (V) comprising at least one frame (1) operatively connected to movement means (2) of said AGV (V), picking up and handling means (3) of at least said first reel (B1), detection means (4) of the contact or abutment of at least said first reel (B1) with at least said second reel (B2) and processing and control means (6) of said AGV (V) in electronic and/or electrical communication with said detection means (4), said detection means (4) being designed to measure a plurality of values (T₁, T₂, ..., T_{N}, D₁, D₂, ..., D_{N}, P₁, P₂, ..., P_{N}) of at least one parameter (T, D, P) in at least a given time interval (TR_{T}, TR_{D}, TR_{P}, TR_{DIF}) and to communicate said plurality of values (T₁, T₂, ..., T_{N}, D₁, D₂, ..., D_{N}, P₁, P₂, ..., P_{N}) to said processing means and control means (6) so that said processing and control means (6) can verify the contact or abutment of said first reel (B1) with at least said second reel (B2), calculating at least one variation value of said at least one parameter (ΔT , ΔD, ΔP) in said at least a given time interval (TR_{T}, TR_{D}, TR_{P}) and/or the difference (DIF) between two respective variation values (ΔD, ΔP) of two parameters (D, P) of said at least one parameter (T, D, P) in a given time interval (TR_{DIF}) to determine if said at least one variation value (ΔT, ΔD, ΔP) and/or said difference (DIF) satisfies at least one certain condition (T_{COND}, D_{COND}, P_{COND}, DIF_{COND}).

12. Vehicle according to the preceding claim, wherein said movement means (2) comprise at least one motor (2a) and a plurality of wheels or tracks (2b) operatively associated with said at least one motor (2a).

13. Vehicle according to claim 11 or 12, wherein said picking up and handling means (3) comprise at least one support upright (3a) associable with said frame (1), and at least one manipulation head (3b) for at least said first reel (B1) connected to said support upright (3a), said manipulation head (3b) comprising at least gripping means (3b1) configured to grip at least said first reel (B1), said support upright (3a) comprising at least vertical translation means (3c) designed to translate said manipulation head (3b) along a direction perpendicular to the ground.

14. Vehicle according to any one of claims 11 to 13, wherein said detection means (4) comprise at least one torque sensor (4a) designed to measure the torque value (T) of said movement means (2) and/or at least one distance sensor (4b) designed to measure the distance value (D) between said distance sensor (4b) and at least said second reel (B2) and/or at least one position sensor (4c) of said AGV (V) designed to measure the distance value (P) between at least one first and at least one second position of said position sensor (4c) in said at least one given time interval (TR_{P}).

15. Vehicle according to any one of claims 11 to 14, wherein said at least one certain condition (T_{COND}, D_{COND}, P_{COND}, DIF_{COND}) relates to a pre-set torque variation limit value (ΔT_{MAX}) and/or to a limit value of pre-set distance variation limit value (ΔD_{MIN}) and/or a pre-set position variation limit value (ΔP_{MIN}) and/or a pre-set difference limit value (DIF_{MAX}).

16. Vehicle according to claim 14 or 15, wherein said at least one parameter (T, D, P) comprises the torque measurement (T) of said movement means (2) and/or the distance measurement (D) of said sensor distance (4b) from said second reel (B2) and/or the position measurement (P) of said position sensor (4c).

17. Vehicle according to any one of claims 14 to 16, wherein said distance sensor (4b) is a photoelectric sensor.

18. Vehicle according to any one of claims 14 to 16, wherein said position sensor (4c) is a navigational laser scanner mounted on said AGV (V).

19. Vehicle according to any one of claims 11 to 18, wherein said AGV (V) further comprises acquisition means (7) configured to acquire the variation value of the diameter of said first reel (B1) caused by the crushing of the gripping force of said picking up and handling means (3) and/or for detecting the distance value between said first reel (B1) and said second reel (B2).

20. Vehicle according to the preceding claim, wherein said acquisition means (7) comprise second detection means (7a) and movable support means (7b) for said second detection means (7a).

21. Vehicle according to the preceding claim, wherein said second detection means (7a) comprise at least one second distance sensor (7c).

22. Vehicle according to the preceding claim, wherein said at least one second distance sensor (7c) is a second photoelectric sensor or at least one time-of-flight camera or TOF-camera.

23. Vehicle according to any one of claims 20 to 22, wherein said movable support means (7b) comprise at least one movement arm.

24. Plant comprising an automated industrial area (A), at least a first reel (B1), at least a second reel (B2) positioned in said automated industrial area (A) and at least one automatically guided industrial vehicle (V) according to any one of claims from 11 to 23 configured to perform a method according to any one of claims 1 to 10.
